# EUROPEAN PATENT APPLICATION

(11) **EP 2 322 307 A1**
(43) Date of publication of application: **18.05.2011**
(21) Application number: 10014553.1
(22) Date of filing: 12.11.2010
(51) Int. Cl.: B23K 9/133, B23K 9/32, B65H 57/12, B65H 57/14, F16C 1/26, F16L 11/18, F16L 27/02, F16L 27/08, H01R 35/04, H02G 3/04

(54) **Liner for guiding wire, in particular welding wire, with low friction**

(30) Priority: 13.11.2009 US 618250
(71) Applicant: Awds Technologies Srl, 38060 Villa Lagarina (TN) (IT)
(72) Inventor: Gelmetti, Carlo, 37017 Lazise (VR) (IT); Corradini, Filippo, 38060 Isera (TN) (IT)
(74) Representative: Prinz & Partner

(57) **Abstract**

A liner (62) for guiding wire (2) with low friction has a plurality of liner bodies carrying rolling elements. The liner body is connected with at least one adjacent liner body by means of a pivot connection. At least one of the liner bodies is connected to a first swivel joint body (58) which in turn is connected to a second swivel joint body (54) so as to form a swivel joint allowing rotation by more than 360° between the first and the second swivel joint bodies (54,58).

## Description

The invention relates to a liner for guiding wire with low friction, having a plurality of liner bodies carrying rolling elements, each liner body being connected with at least one adjacent liner body by means of a pivot connection.

The wire guiding liner serves for guiding a wire, in particular a welding wire. The liner can be used for guiding the wire from a wire container towards a welding robot or for guiding it within the welding robot from a feeder towards a welding torch. The purpose of the liner is to guide the wire with low friction so that the welding wire can be pushed or pulled smoothly through the liner.

From our previously filed patent application PCT/EP2009/001285, a liner is known which consists of a plurality of liner bodies connected to each other by means of a pivot connection. Each liner body comprises a set of rolling elements which guide the wire without friction.

If such liner is fitted to a welding robot, there can occur a problem. Normally the robot arm to which the welding torch hose pack is attached, moves and swings in all directions, depending on the programmed welding sequence and how the part(s) need to be welded. The welding torch can be rotated up to 360° and all these convolutions could cause the hose pack to be wrapped onto itself or around the robot arm. It then becomes shorter and a sudden stretching of the arm can cause the joints or end connections to snap and break.

If such liner is used for transporting the wire from the welding wire container to the wire feeder, other problems can occur. During the transportation and installation of the liner in an open space or confined into a cable track, a longer piece of liner is difficult to uncoil from a flat position, and must be continuously twisted to compensate the tension buildup while it is being unwound. Moreover, in the case of some robotic equipment of exceptionally large size and dimensions, it is impossible to install long liners (in some cases liners can be as long as 50 meters) at the manufacturing site and then ship the separate robot components to the end user.

In order to solve these problems, a liner for guiding wire with low friction is provided. The liner has a plurality of liner bodies carrying rolling elements. The liner body is connected with at least one adjacent liner body by means of a pivot connection. At least one of the liner bodies is connected to a first swivel joint body which in turn is connected to a second swivel joint body so as to form a swivel joint allowing rotation by more than 360° between the first and the second swivel joint bodies. Including a swivel joint prevents that excessive torsional loads can be generated with the liner. For a liner used at a welding robot, any torsion resulting from the movements of the welding robot arm is easily discharged by allowing the liner to rotate with respect to its attachment. In a liner used for transporting welding wire over long distances, any torsion resulting during installation of the liner can be easily discharged.

In one embodiment, the second swivel joint body is a termination body which terminates the liner. The termination body can be used for attaching the liner e.g. to a welding robot.

In another embodiment, the second swivel joint body is a connection body which is connected to a liner body of another liner. This embodiment uses the swivel joint between two adjacent liner segments. On the one hand, the swivel joint prevents that a torsional load builds up in the liner. Further, the swivel joint can be used as a connection for joining shorter segment to a longer liner. Handling and assembling shorter segments is easier than handling a long liner.

Preferably, the second swivel joint body is connected to the liner body of the other liner by means of a pivot connection. This ensures full flexibility of the liner despite the presence of the swivel joint.

Preferably, each of the swivel joint bodies has a support for an outer sheath. This allows to use a continuous outer sheath extending along the liner and interrupted only at the place where a swivel joint is used.

The swivel joint can be made from plastics, in particular from polyamide, if low manufacturing costs are a priority, or from metal if stability is the priority. It is also possible to make one piece of the swivel joint from plastic and the other from metal, in particular brass, in order to obtain a smooth sliding effect.

According to an embodiment, the swivel joint contains a circumferential groove into which a projection engages so as to allow a swiveling motion between the first and the second swivel bodies. This construction has proven to provide a reliable and strong connection while at the same time resulting in reasonable manufacturing costs.

According to one aspect of the invention, a welding wire liner adapted for being installed in a welding robot is provided. The liner has a plurality of liner bodies. Each liner body is connected with at least one adjacent liner body by means of a pivot connection. The liner has a swivel joint at least at one of its ends, by means of which it is connected to a stationary part of the welding robot, e.g. the wire feeder. The swivel joint allows the liner to rotate around its longitudinal axis with respect to its attachment at the robot, thereby preventing that excessive torsional loads are being built up in the liner.

According to another aspect of the invention, a welding wire liner consisting of at least two segments is provided. Each segment has a plurality of liner bodies. Each liner body is connected with at least one adjacent liner body by means of a pivot connection. The segments are connected by means of a swivel joint which allows the two segments to rotate with respect to each other around the central axis of the liner. The swivel joint can serve two purposes: First, it allows adjacent segments to rotate with respect to each other, thereby preventing that excessive torsional loads are being built up in the liner. Second, it allows to join segments during installation at a plant to a liner of the appropriate lengths. Thus, it is not necessary to handle a long liner and to cut it to the necessary length.

The invention will now be explained in detail with reference to the enclosed drawings. In the drawings,
Figure 1 shows a general, schematic view of the liner used for guiding welding wire;
Figure 2 shows an exploded view of two liner bodies forming part of a liner;
Figures 3a to 3e show a first embodiment of the liner;
Figures 4a to 4e show a second embodiment of the liner;
Figures 5a to 5h show a third embodiment of the liner; and
Figures 6a to 6e show a fourth embodiment of the liner.

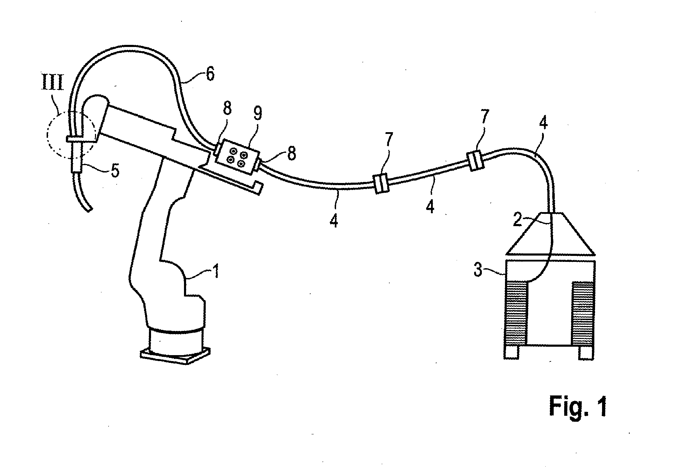

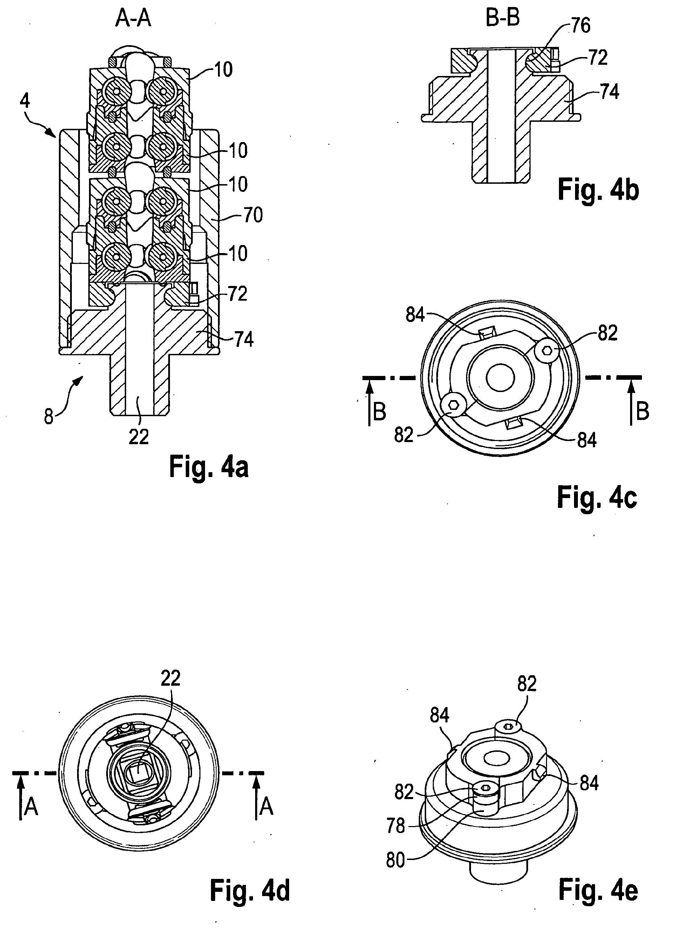

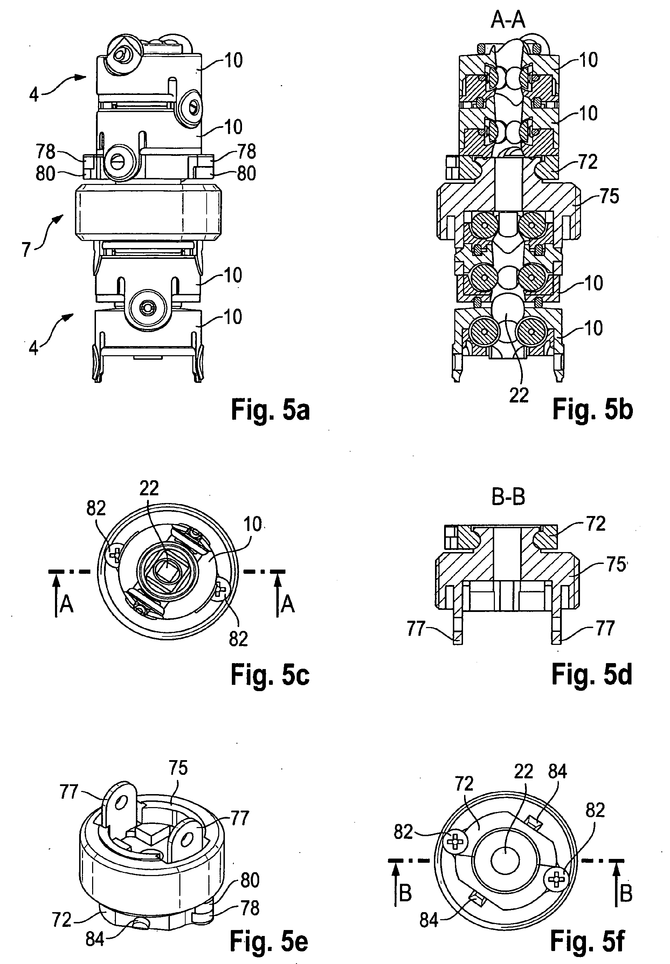

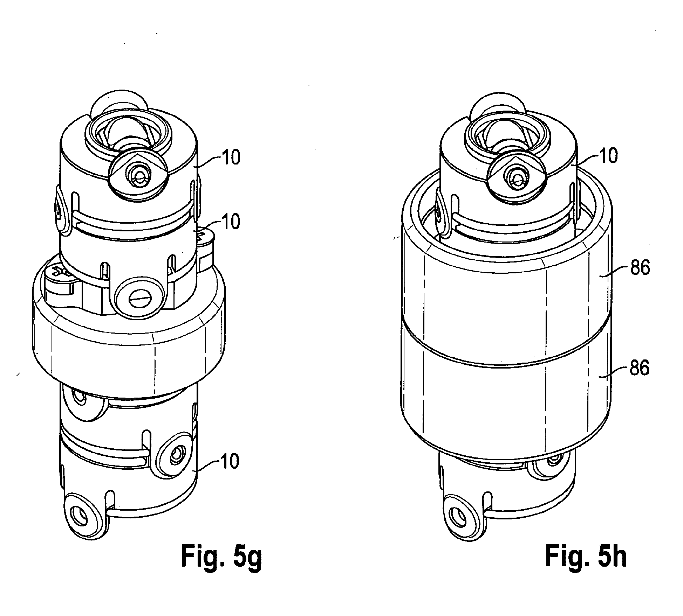

In Figure 1, a welding robot 1 is schematically shown, which is supplied with welding wire 2 from a container 3. Welding wire container 3 is situated in a distance from welding robot 1 at a place which is easily accessible with for example a fork lift. In order to guide welding wire 2 with low friction from container 3 to welding robot 1, a liner is provided which here consists of a couple of different segments. Three first liner segments 4 are used for guiding the welding wire from the container towards welding robot 1 and to a certain point on the welding robot, e.g. to a wire feeder 9. From this point toward a welding torch 5, a welding wire liner 6 is used. Welding wire liner 6 differs from welding wire liner 4 in some respects which will be explained below. Between the individual segment 4, swivel joints 7 are used. The swivel joints allow segments 4 to be rotated with respect to each other in order to prevent excessive torsional loads from occurring. The swivel joint will later be explained with reference to Figure 5. At the place where liner segment 4 is connected to welding robot 1, a swivel termination 8 is used which will later be explained with reference to Figure 4. Along the welding robot, the welding wire guide 6 is used which extends from a swivel termination 8 at wire feeder 9 to a place close to welding torch 5. At the wire feeder 9, electric current, gas, etc. can be introduced into liner 6.

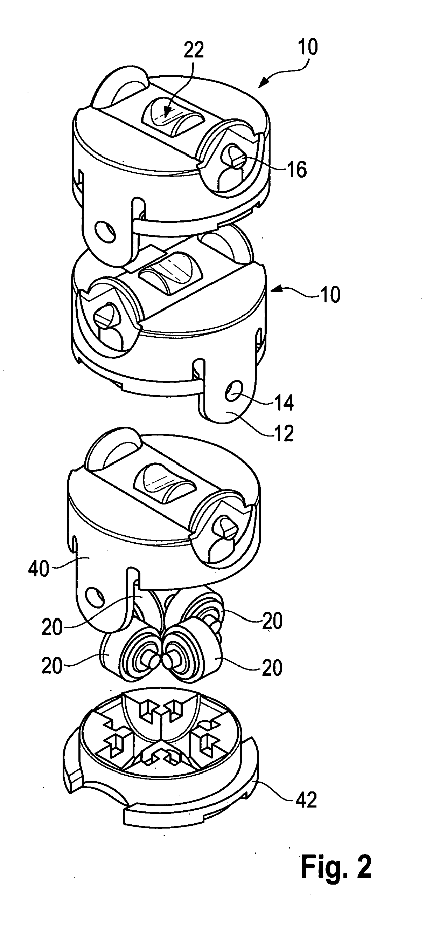

In Figure 2, some of the components of the liner are shown. The wire guiding liner consists of a plurality of identical liner bodies 10 which are pivotally connected to each other. Each liner body 10 comprises two connecting lugs 12 which are arranged diametrically opposite each other. Each connecting lug 12 comprises an opening 14. Both openings 14 of a liner body define a pivot axis which extends in a first direction. Further, each liner body is provided with two pivoting studs 16 which are also arranged diametrically opposite each other. The pivoting studs 16 define a second pivoting axis, the first and the second pivoting axis being oriented at an angle of 90 degrees with respect to each other. The liner bodies 10 are connected to each other by engaging the pivoting studs 16 of a first liner body 10 into the openings 14 of a second liner body 10, and so on. Thereby, a wire guiding liner is formed which can have a length of several meters. The liner can be brought into a curved shape as the liner bodies can be pivoted with respect to the adjacent liner body.

Each liner body contains four rolls 20 which are rotatably accommodated in the respective liner body. The rotation axes of the rolls are arranged pairwise in parallel, with the rotation axis of two opposite rolls being perpendicular to the rotation axis of the rolls of the other pair. Between the rolls 20 and in the center of each liner body, a wire guiding channel 22 is formed, which extends through the entire wire guiding liner.

Each liner body 10 is formed from a body part 40 and a cover part 42. The cover part 42 is arranged between the connecting lugs 12 of the body part 40 and serves to hold rolls 20 within the respective liner body 10.

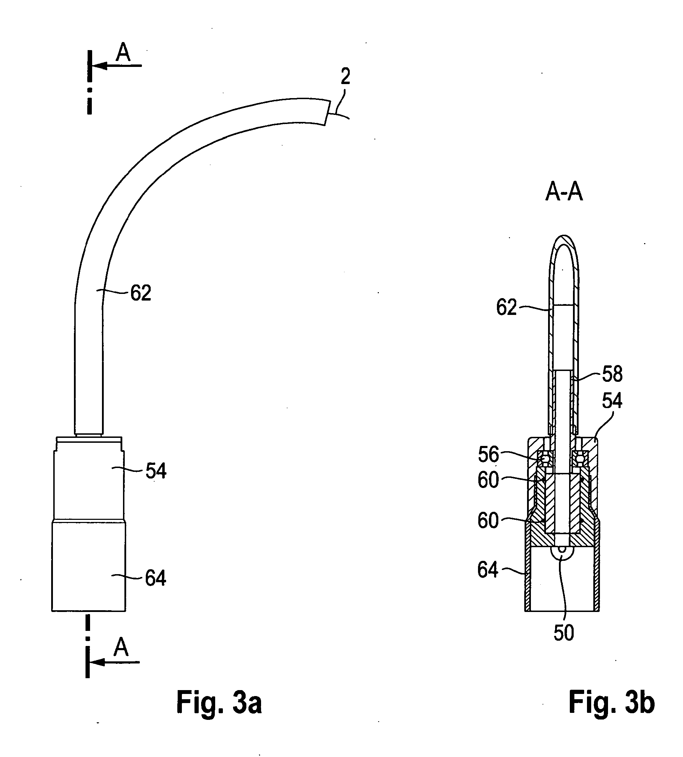

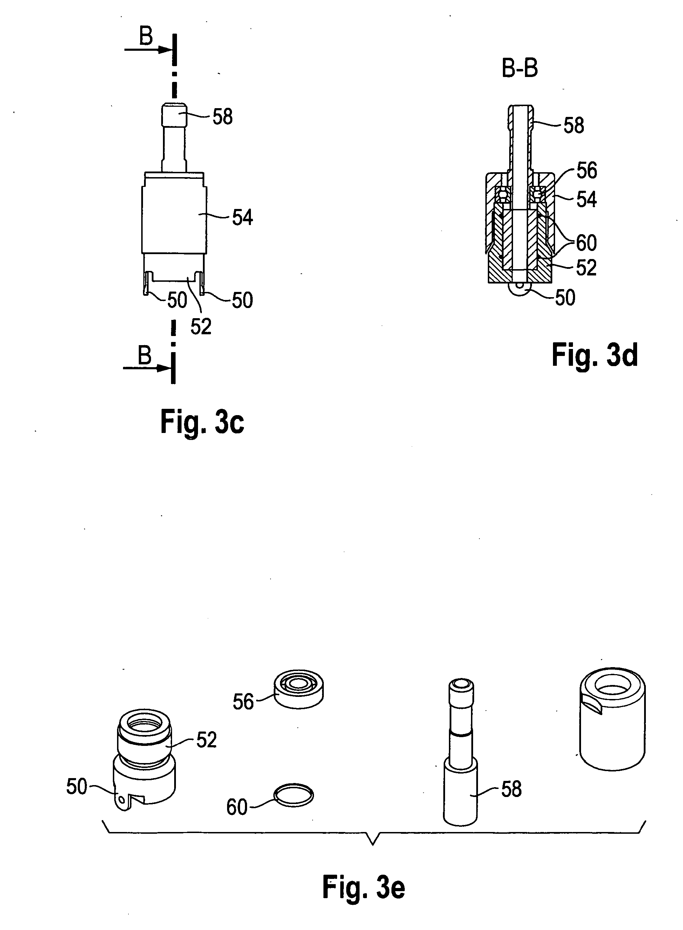

In Figures 3a to 3e, the end of liner 6 in the vicinity of welding torch 5 is shown in greater detail. It serves for allowing a rotation of liner 6 with respect to welding torch 5. To this end, the last liner body (not shown) of liner 6 engages with its pivoting studs 16 into connecting lugs 50 formed on a supporting element 52. A cover 54 can be screwed onto supporting element 52 so as to clamp a ball bearing 56 between cover 54 and supporting element 52. Ball bearing 56 accommodates a wire guiding sleeve 58 which is thereby held rotatably with respect to supporting element 52. Two O rings 60 are provided which seal between an interior surface of supporting element 52 and an outer surface of wire guiding sleeve 58. To the upper end of wire guiding sleeve 58, a Teflon tube 62 is connected which extends towards torch 5. An outer, gastight sheath 64 is connected to supporting element 52 in a gastight manner.

Supporting element 52 forms a first swivel joint body while wire guiding sleeve 58 forms a second swivel joint body. Ball bearing 56 allows the two swivel joint bodies to be rotated with respect to each other, thereby preventing that excessive torsional loads are being built up in liner 6. O rings 60 prevent that gas can leak out of the liner at the swivel joint formed by supporting element 52 and wire guiding sleeve 58.

In Figures 4a to 4e, a swivel termination 8 is shown which is used for connecting liner 4 to a wire feeder 9 at the welding robot 1. Liner 4 here consists of a plurality of joined liner bodies 10 which are arranged in the interior of a sheath 70. The swivel joint here consists of a first swivel joint body 72 and a second swivel joint body 74 which here is a termination body which terminates the liner. The second swivel joint body 74 is firmly connected to sheath 70, preferably in a gastight manner. This prevents dirt and other contaminations from entering into liner 4. The swiveling nature of swivel joint 8 is achieved by having the first swivel joint body 72 engage into a circumferential groove 76 formed on the second swivel joint body 74. Preferably, the second swivel joint body 74 is formed from a plastic material, in particular from polyamide. The first swivel joint body is preferably formed from metal, in particular from brass. In this way, a very smooth gliding movement of one of the swivel joint bodies with respect to the other swivel joint body is achieved.

The first swivel joint body 72 which is ring-like, is formed from two generally semicircular parts, with each part having a holding eye 78 at one end and a threaded portion 80 at the opposite end. Holding eye 78 is located at another level than threaded portion 80 so that holding eye 78 of one part lies on top of threaded portion 80 of the other part. This allows to use a bolt 82 which extends through holding eye 78 of one of the parts and is threaded into threaded portion 80 of the other part. This holds the two parts together so that there is a non-detachable engagement into groove 76.

Each of the parts of the first swivel joint body 72 is provided with a pivoting stud 84 which engages into the connecting lug 12 of the first liner body 10. Thereby, the liner is firmly connected to the first swivel joint body 72 of the swivel joint.

It is no problem if sheath 70 is firmly connected to the second swivel joint body 74 as the sheath is made from rubber. Rubber can absorb a large amount of rotation between the two ends of the liner so that it is sufficient if only the liner bodies itself are made rotatable with respect to the second swivel joint body 74.

In Figures 5a to 5h, a swivel joint 7 used for connecting two segments 4 of the liner is shown in detail. As this swivel joint largely corresponds to swivel joint 8 shown in Figure 4, the same reference numerals are used, and the below explanations only address the differences.

In order to allow attaching a second liner 4, the second swivel joint body 75 is here provided with two connecting lugs 77 into which the two pivoting studs 16 of the first liner body 10 of the second segment of liner 4 engage. In this way, two liner segments 4 are joined by means of the swivel joint 7 which allows the liner segments 4 to be rotated with respect to each other around their longitudinal or center axes. Further, swivel joint 7 allows to join shorter liner segments 4 having a length of a couple of meters to a long liner having the appropriate length, without having to handle a very long liner and to cut the liner to the appropriate length. Rather, the individual segments can be fitted to either the first or the second swivel joint body 72, 75 and can be connected to the next segment.

As can be seen in Figure 5h), two supporting sleeves 86 are provided which are connected to the respective swivel joint body so as to rotate therewith. Each supporting sleeve 86 is intended to be connected to an outer sheath which covers the liner formed from liner bodies 10 and prevents dirt and other contaminations from entering.

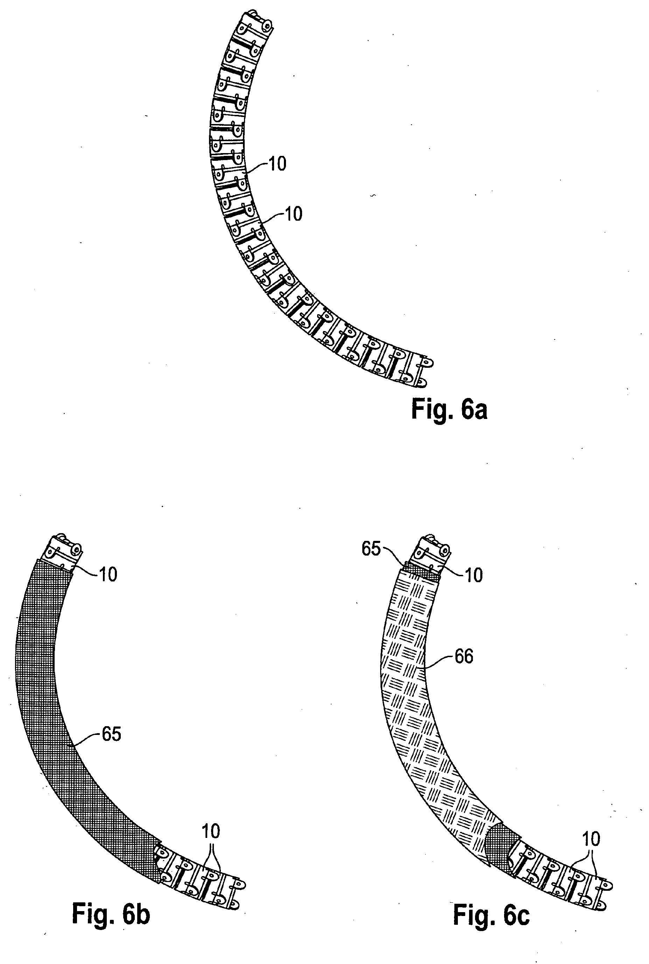

In Figures 6a to 6c, a portion of liner 6 extending up to welding torch 5 is shown in greater detail. Sheath 64 here consists of an inner layer 65 which is made from rubber. On the outside of inner layer 65, a mesh 66 made from an electrically conducting element is provided, in particular a copper mesh. Copper mesh 66 is covered by an outer layer of the sheath, the outer layer being made from rubber, plastic or Kevlar.

Sheath 64 is gas-tight so that gas and/or cooling water can be guided from wire feeder 9 towards welding torch 5 in the interior of liner 6. In addition, electric current can be guided via copper mesh 66. Accordingly, a very compact liner is formed which carries the welding wire 2, electric current and gas.

Liner 6 has an outer diameter that allows it to be included in a welding torch hose pack, together with cables carrying the electrical current and hoses carrying coolants like water and the shielding gas, necessary for the MIG welding process. It replaces the normal liner and it can feed welding wires with diameter ranging from 0.6 mm to 2.00 mm. It addresses efficiently the issue of attrition, wire scratching, and inconsistent feeding and wire surface contamination. The advantages offered range from better quality welds to a higher productivity and reduced maintenance costs. An additional solution to improve the compactness of the hose torch pack is represented by the copper mesh which can be wrapped around the liner. A preferred embodiment, which can be employed in air cooled welding torches, is the small size liner with rolls covered by a rubber or silicon protection around which a copper mesh is being wound and the whole is eventually dressed in Kevlar, to form a compact round torch hose pack with the shielding gas traveling with the wire at the centre of the liner, which the current is transported by the copper mesh wrapped all around outer surface of the liner.

Liner 4 has a larger diameter and is normally utilized to transport, without friction, welding wires (with diameter ranging from 0.60 to 4.00 mm) from the wire container to the wire feeder unit. The larger version is ideal for retrofitting into robots cable tracks. It can be used in the MIG (GMAW) welding processes, Submerged Arc (SAW) welding processes and laser processes. The swiveling joints in the middle of exceptionally long liners and the end connectors help release the tension being created from uncoiling long pieces of liner from a horizontal position. Shorter pieces of liner to be mounted on robot equipment components at the manufacturing site, and eventually joined after the robot assembly, with swiveling joints and extensions.

## Claims

1. A liner for guiding wire with low friction, having a plurality of liner bodies carrying rolling elements, each liner body being connected with at least one adjacent liner body by means of a pivot connection, wherein at least one of the liner bodies is connected to a first swivel joint body, the first swivel joint body being connected to a second swivel joint body so as to form a swivel joint allowing rotation by more than 360° between the first and the second swivel joint bodies.

2. The liner of claim 1 wherein the second swivel joint body is a termination body which terminates the liner.

3. The liner of claim 1 wherein the second swivel joint body is a connection body which is connected to a liner body of another liner.

4. The liner of claim 3 wherein the second swivel joint body is connected to the liner body of the other liner by means of a pivot connection.

5. The liner of claim 3 or claim 4 wherein each of the swivel joint bodies has a support for an outer sheath.

6. The liner of any of the preceding claims wherein the swivel joint is made from plastics.

7. The liner of any of claims 1 to 5 wherein the swivel joint is made from metal.

8. The liner of any of the preceding claims wherein the swivel joint contains a circumferential groove into which a projection engages so as to allow a swiveling motion between the first and the second swivel bodies.

9. The liner of any of the preceding claims wherein an outer sheath is provided, the sheath including an electrically conducting element.

10. The liner of claim 9 wherein the electrically conducting element is a copper mesh which is arranged between in inner sheath layer made of rubber and an outer sheath layer made from one of rubber, plastic and Kevlar.

11. A welding wire liner adapted for being installed in a welding robot, the liner having a plurality of liner bodies, each liner body being connected with at least one adjacent liner body by means of a pivot connection, the liner having a swivel joint at least at one of its ends, by means of which it is connected to a stationary part of the welding robot.

12. A welding wire liner consisting of at least two segments, each segment having a plurality of liner bodies, each liner body being connected with at least one adjacent liner body by means of a pivot connection, the segments being connected by means of a swivel joint which allows the two segments to rotate with respect to each other around the central axis of the liner.
